# EUROPEAN PATENT APPLICATION

(11) **EP 4 793 942 A1**
(43) Date of publication of application: **19.08.2026**
(21) Application number: 25838420.5
(22) Date of filing: 10.12.2025
(51) Int. Cl.: G10L 17/08, G10L 15/26, G10L 25/87, G06F 40/279, G10L 15/22, G10L 15/06

(54) **ELECTRONIC DEVICE AND CONTROL METHOD THEREFOR**

(30) Priority: 18.12.2024 KR 20240190175
(71) Applicant: Samsung Electronics Co., Ltd, Suwon-si, Gyeonggi-do 16677 (KR)
(72) Inventor: CHOI, Younho, Suwon-si, Gyeonggi-do 16677 (KR); CHOI, Jinwuk, Suwon-si, Gyeonggi-do 16677 (KR); HAHM, Cheulhee, Suwon-si, Gyeonggi-do 16677 (KR); LEE, Sangyoung, Suwon-si, Gyeonggi-do 16677 (KR)
(74) Representative: Appleyard Lees IP LLP
(86) International application number: PCT/KR2025/021273
(87) International publication number: WO 2026/134984

(57) **Abstract**

If collectively or individually executed by the at least one processor, the instructions cause an electronic apparatus to obtain a sampled audio signal from a video based on a sampling period corresponding to a voice period included in an audio signal, and identify a speaker generating a voice in the video based on the obtained audio signal and a weight value corresponding to a length of a text included in the video.

## Description

### [Technical Field]

The present disclosure relates to an electronic apparatus and a controlling method thereof, and more particularly, to an electronic apparatus that matches a subtitle to a speaker, and a controlling method thereof.

### [Background Art]

Recently, a voice signal and a subtitle corresponding to the voice signal may be simultaneously provided to a user.

However, conventionally, if a speaker that generates the voice signal is changed while the subtitle is displayed on a display, the subtitle and the speaker that generates the voice signal corresponding to the subtitle may be incorrectly matched to each other.

Accordingly, the aim of the present disclosure is to provide subject-matter that improves on the prior art.

### [Disclosure]

### [Technical Solution]

According to an aspect of the present disclosure, provided is an electronic apparatus including: a display; a communication interface; a memory storing instructions; and at least one processor, wherein, if collectively or individually executed by the at least one processor, the instructions cause the electronic apparatus to obtain a sampled audio signal from a video based on a sampling period corresponding to a voice period included in an audio signal, and identify a speaker generating a voice in the video based on the obtained audio signal and a weight value corresponding to a length of a text included in the video. In this way, a subtitle may be matched to a speaker even in cases where the speaker changes or at least two speakers simultaneously speak.

In an embodiment, if collectively or individually executed by the at least one processor, the instructions may cause the electronic apparatus to obtain a sampling period less than or equal to a predetermined value if a detection time point for identifying the sampling period corresponds to a start point of the voice period included in the audio signal, and obtain a sampling period greater than or equal to the predetermined value if the detection time point for identifying the sampling period corresponds to a point at which a threshold time elapses since the start point of the voice period included in the audio signal.

In an embodiment, if collectively or individually executed by the at least one processor, the instructions may cause the electronic apparatus to perform control to reset the sampling period if the detection time point for identifying the sampling period corresponds to an end point of the voice period included in the audio signal.

In an embodiment, if collectively or individually executed by the at least one processor, the instructions may cause the electronic apparatus to obtain the sampling period by using the number of sampled audio signals obtained based on a total number of sampled audio signals, a length of the audio signal, and an audio signal length corresponding to a subtitle output.

In an embodiment, if collectively or individually executed by the at least one processor, the instructions may cause the electronic apparatus to perform a function for recognizing the text included in a text region obtained from the video output to the display, and obtain a length corresponding to the text obtained using the function.

In an embodiment, if collectively or individually executed by the at least one processor, the instructions may cause the electronic apparatus to obtain a length in which the text included in the video output to the display and the audio signal are simultaneously output, by using the length of the audio signal corresponding to the identified text that may be obtained based on the length corresponding to the identified text, and obtain the weight value based on the sampling period and the length in which the text included in the video output to the display and the audio signal are simultaneously output.

In an embodiment, if collectively or individually executed by the at least one processor, the instructions may cause the electronic apparatus to obtain a probability value for identifying the speaker generating the voice in the video based on the obtained weight value and a total number of sampled audio signals.

In an embodiment, if collectively or individually executed by the at least one processor, the instructions may cause the electronic apparatus to identify a first speaker as generating a voice if the obtained probability value corresponds to a first probability value corresponding to the first speaker generating the voice included in the audio signal, and identify a second speaker as generating a voice if the obtained probability value corresponds to a second probability value corresponding to the second speaker generating the voice included in the audio signal.

In an embodiment, if collectively or individually executed by the at least one processor, the instructions may cause the electronic apparatus to control the display to display the text corresponding to the audio signal from the identified first speaker and information about the first speaker together if the first speaker is identified as generating the voice, and control the display to display the text corresponding to the audio signal from the identified second speaker and information about the second speaker together if the second speaker is identified as generating the voice.

In an embodiment, if collectively or individually executed by the at least one processor, the instructions may cause the electronic apparatus to obtain weight values based on an identification result if voice signals included in the obtained audio signals correspond to voice signals from a plurality of speakers

According to an aspect of the present disclosure, provided is a controlling method of an electronic apparatus, the method including: obtaining a sampled audio signal from a video based on a sampling period corresponding to a voice period included in an audio signal; and identifying a speaker generating a voice in the video based on the obtained audio signal and a weight value corresponding to a length of a text included in the video.

In an embodiment, in the setting of the sampling period, a sampling period less than or equal to a predetermined value may be obtained if a detection time point for identifying the sampling period corresponds to a start point of the voice period included in the audio signal, and a sampling period greater than or equal to the predetermined value may be obtained if the detection time point for identifying the sampling period corresponds to a point at which a threshold time elapses since the start point of the voice period included in the audio signal.

In an embodiment, the setting of the sampling period may include resetting the sampling period if the detection time point for identifying the sampling period corresponds to an end point of the voice period included in the audio signal.

In an embodiment the setting of the sampling period may include obtaining the sampling period by using the number of sampled audio signals obtained based on a total number of sampled audio signals, a length of the audio signal, and an audio signal length corresponding to a subtitle output.

In an embodiment, the obtaining of the information about the text included in the video displayed on the display includes performing a function for recognizing the text included in a text region obtained from the video output to the display, and obtaining a length corresponding to the text obtained using the function.

In an embodiment, the method may include: obtaining a length in which the text included in the video output to the display and the audio signal are simultaneously output, by using the length of the audio signal corresponding to the identified text that may be obtained based on the length corresponding to the identified text, and obtaining the weight value based on the sampling period and the length in which the text included in the video output to the display and the audio signal are simultaneously output.

In an embodiment, the method may include obtaining a probability value for identifying the speaker generating the voice in the video based on the obtained weight value and a total number of sampled audio signals.

In an embodiment, the method may include: identifying a first speaker as generating a voice if the obtained probability value corresponds to a first probability value corresponding to the first speaker generating the voice included in the audio signal, and identifying a second speaker as generating a voice if the obtained probability value corresponds to a second probability value corresponding to the second speaker generating the voice included in the audio signal.

In an embodiment, the method may include: displaying the text corresponding to the audio signal from the identified first speaker and information about the first speaker together if the first speaker is identified as generating the voice, and displaying the text corresponding to the audio signal from the identified second speaker and information about the second speaker together if the second speaker is identified as generating the voice.

According to an aspect of the present disclosure, provided is a non-transitory computer-readable storage medium including a program for executing a controlling method of an electronic apparatus, wherein the method includes obtaining a sampled audio signal from a video based on a sampling period corresponding to a voice period included in an audio signal, and identifying a speaker generating a voice in the video based on the obtained audio signal and a weight value corresponding to a length of a text included in the video.

### [Description of Drawings]

The subject-matter of the present disclosure is best understood with reference to the accompanying figures, in which:
FIG. 1 is a diagram for describing an embodiment of an electronic apparatus according to one or more embodiments of the present disclosure.
FIG. 2 is a block diagram for describing a configuration of the electronic apparatus according to one or more embodiments of the present disclosure.
FIGS. 3 to 7 and FIG. 9 are diagrams for describing a method for identifying a speaker corresponding to a subtitle based on a sampling period and a weight value according to one or more embodiments of the present disclosure. Advantageously, weighted sampling reduces misrecognition based on dialogue length.
FIG. 8 and FIG. 10 is a flowchart for describing a controlling method of an electronic apparatus according to one or more embodiments of the present disclosure.

### [Mode for Invention]

The present disclosure may be variously modified and have several embodiments, and specific embodiments of the present disclosure are thus illustrated in the accompanying drawings and described in detail in this specification. However, it should be understood that the scope of the present disclosure are not limited to specific embodiments, and include all modifications, equivalents, and alternatives according to an embodiment of the present disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope of the present disclosure are not limited to the following embodiments. Rather, these embodiments make the present disclosure thorough and complete, and are provided to completely convey the present disclosure to those skilled in the art.

Terms used in the present disclosure are used only to describe the specific embodiments rather than limit the scope of the present disclosure. A term of a singular number may include its plural number unless explicitly indicated otherwise in the context.

In the present disclosure, the expression such as "have", "may have", "include", or "may include", indicates the presence of a corresponding feature (for example, a numerical value, a function, an operation, or a component such as a part), and does not exclude the presence of an additional feature.

In the present disclosure, the expression such as "A or B", "least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the present disclosure, may indicate various components regardless of the sequence and/or importance of the components. These expressions are only used to distinguish one component and another component from each other, and do not limit the corresponding components.

If any component (for example, a first component) is mentioned to be "(operatively or communicatively) coupled with/to" or "connected to" another component (for example, a second component), it should be understood that the any component is directly coupled to another component or may be coupled to another component through yet another component (for example, a third component).

On the other hand, if any component (for example, the first component) is mentioned to be "directly coupled with/to" or "directly connected to" another component (for example, the second component), it should be understood that yet another component (for example, the third component) is not present between any component and another component.

An expression such as "configured (or set) to", used in the present disclosure, may be replaced by an expression such as "suitable for", "having the capacity to", "designed to", "adapted to", "made to", or "capable of", depending on a context. The expression "configured (or set) to" does not necessarily indicate "specifically designed to" in terms of hardware.

Instead, the expression "a device configured to", in any context, may indicate that the device may "perform~" together with another device or component. For example, a "processor configured (or set) to perform A, B, and C" may indicate a dedicated processor (for example, an embedded processor) that may perform the corresponding operations or a general-purpose processor (for example, a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by the processor 160 except for a "module" or a "part" that needs to be implemented by specific hardware.

Meanwhile, the various elements and areas in the drawings are schematically shown. Therefore, the present disclosure is not limited by relative sizes or intervals shown in the accompanying drawings.

Hereinafter, various embodiments of the present disclosure are described in detail with reference to the accompanying drawings.

Features described with reference to one embodiment may be combined with features from another embodiment without introducing new subject-matter.

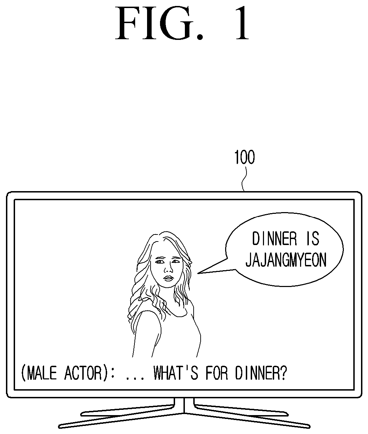

FIG. 1 is a diagram for describing an embodiment of an electronic apparatus according to one or more embodiments of the present disclosure. In FIG. 1, the electronic apparatus is shown as a television (TV), which is only an embodiment, and may be implemented as any of various types of electronic apparatuses such as tablets, laptop computers, smartphones, cameras, and personal computers (PCs).

The electronic apparatus 100 may output an audio signal and a subtitle corresponding to the audio signal as shown in FIG. 1.

For example, if a male actor speaks a voice "What's for dinner tonight?", a display 130 may display a subtitle "What's for dinner tonight?". Here, while the subtitle "What's for dinner tonight?" is displayed on the display 130, a female actor may speak a voice "Dinner is Jajangmyeon" in response to the question from the male actor.

Conventionally, if a speaker changes from the male actor to the female actor while the subtitle "What's for dinner tonight?" is displayed as shown in FIG. 1, the subtitle "What's for dinner tonight?" may be incorrectly displayed as a voice signal generated by the female actor.

To address this issue, the electronic apparatus 100 may identify whether the voice signal generated by the speaker starts upon sampling the audio signal included in video data. If the voice signal is identified as starting, the electronic apparatus 100 may set a short sampling period. The sampling period may comprise the interval at which sampling takes place. The sampling period may represent a frequency or rate of sampling. Sampling may comprise a process of converting the audio signal in an analog form into digital data. The voice signal may comprise a portion of the audio signal which contains speech or speech-like sounds. The voice signal may comprise a portion of the audio signal which can be converted into subtitles.

In addition, the electronic apparatus 100 may set a higher weight value if a period in which the voice is output and a period in which the subtitle is displayed overlap each other in the sampled audio signal, and may set a lower weight value if the period in which the voice is output and the period in which the subtitle is displayed do not overlap. In addition, the electronic apparatus 100 may also set the lower weight value if the voices are output by at least two speakers.

Here, the weight value may be a value indicating whether the subtitle and the speaker speaking the subtitle match each other. The weight value may indicate the extent to which the subtitle and the speaker speaking at the time the subtitle is displayed match each other. In detail, if a high weight value is provided, a level of matching between the subtitle and the speaker speaking the subtitle may be high. For example, a high weight value may indicate a large portion of overlap between the time during which the subtitle is displayed and the time during which the speaker speaking the subtitles is speaking. On the other hand, if a low weight value is provided, the speaker generating the audio signal may change or a plurality of speakers may simultaneously generate the audio signals, and accordingly, the subtitle and the speaker speaking the subtitle may not match each other.

The electronic apparatus 100 may identify the speaker that generates the voice signal corresponding to the subtitle based on the weight value and the sampled audio signal. In detail, the electronic apparatus 100 may calculate a probability value for distinguishing the speaker by multiplying the sampled audio signal by the weight value. This configuration is described in detail below.

The electronic apparatus 100 may identify the speaker matching the subtitle based on the obtained probability value. As shown in FIG. 1, the electronic apparatus 100 may identify the subtitle "What's for dinner tonight?" as the subtitle corresponding to the male actor, even if the speaker changes from the male actor to the female actor. In this way, it is possible to indicate which speaker is speaking the subtitles, even if that speaker is not currently speaking. For example, the display 130 may display a subtitle for the voice signal generated by the female actor and the name of the female actor to indicate who is speaking to the watcher.

Meanwhile, for convenience of description, the above description assumes that the electronic apparatus 100 includes the display 130, which is only an embodiment. The electronic apparatus 100 may output the video data or the audio signal by using a high definition multimedia interface (HDMI) or a DisplayPort (DP) without including the display 130.

If the electronic apparatus 100 does not include the display 130, the electronic apparatus 100 may transmit the data to an external device that includes the display, or the external device may output the video data or the audio signal.

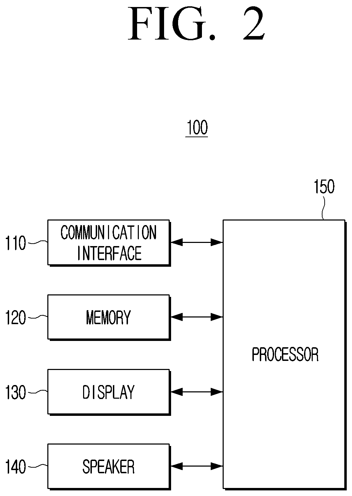

FIG. 2 is a block diagram for describing components included in the electronic apparatus 100 according to an embodiment of the present disclosure. The components shown in FIG. 2 are only an embodiment, and some components may be omitted or a new component may be added. As shown in FIG. 2, the electronic apparatus 100 may include a communication interface 110, a memory 120, the display 130, a speaker 140, and a processor 150. The components shown in FIG. 2 are only an embodiment, and some components may be deleted or added based on a configuration of the electronic apparatus 100.

First, the communication interface 110 is a component for performing communication with various types of external devices by using various types of communication methods. In particular, the communication interface 110 may obtain the video data including the subtitle and the audio signal from the external device. In addition, the communication interface 110 may obtain data related to a method for obtaining the sampled audio signal or a method for setting the sampling period from the external device. The communication interface 110 may obtain a method for obtaining the weight value or data related to the weight value, and may obtain data related to a method for identifying the speaker.

A wireless communication module may be a module that communicates with the external device in a wireless manner. For example, the wireless communication module may include at least one of a wireless fidelity (Wi-Fi) module, a Bluetooth module, an infrared communication module, an ultrawideband (UWB) module, or other communication modules.

A wired communication module may be a module that communicates with the external device in a wired manner. For example, the wired communication module may include at least one of a local area network (LAN) module, an Ethernet module, a pair of cables, a coaxial cable, or a fiber optic cable.

The memory 120 may store an operating system (OS) for controlling overall operations of the components included in the electronic apparatus 100 and instructions or data related to the components included in the electronic apparatus 100. In particular, the memory 120 may store the video data including data related to the audio signal and the subtitle. In addition, the memory 120 may store the data related to the method for obtaining the sampled audio signal or the sampling period, the data related to the weight value, the data related to a method for obtaining feature information of the sampled audio signal or the speaker to which the weight value is applied.

The memory 120 may be implemented in any of various forms, such as a volatile memory (e.g., a dynamic RAM (DRAM)), a static RAM (SRAM), or a synchronous dynamic RAM (SDRAM)) or a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash or a NOR flash), a hard drive, or a solid state drive (SSD)).

The display 130 may display various information. In particular, the display 130 may display the subtitle and the feature information of the speaker speaking the audio signal corresponding to the subtitle. For example, the display 130 may display a subtitle for the voice signal generated by the female actor and the name of the female actor.

The display 130 may be implemented as any of various forms of displays, such as a liquid crystal display (LCD), an organic light-emitting diode (OLED) display, or a plasma display panel (PDP). The display 130 may also include a driving circuit, a backlight unit, and the like, which may be implemented in a form such as an amorphous silicon thin film transistor (a-si TFT), a low temperature poly silicon (LTPS) TFT, or an organic TFT (OTFT). The display 130 may be implemented as a touchscreen combined with a touch sensor, a flexible display, a three-dimensional (3D) display, or the like. According to the various embodiments of the present disclosure, the display 130 may include not only a display panel that outputs an image, but also a bezel that houses the display panel.

The speaker 140 may output the audio signal. For example, the speaker 140 may output the audio signal obtained through the communication interface 110 or the audio signal stored in the memory 120. Here, the output of the speaker 140 may be controlled by the processor 150. For example, a timing at which the speaker 140 outputs the audio signal may be controlled by the processor 150.

Meanwhile, the speaker 140 may include various types of speaker modules. For example, the speaker 140 may include a woofer speaker, a mid-range speaker, or a tweeter.

In addition, the speaker 140 may be disposed at various positions of the electronic apparatus 100. For example, if the electronic apparatus 100 is a TV, the speaker 140 may be disposed at an upper portion of the electronic apparatus 100. However, this configuration is only an embodiment, and the speaker 140 may also be disposed at a lower portion of the electronic apparatus 100. In addition, the speaker 140 may output audio data in various directions. For example, the speaker 140 may output the audio data toward upward from the electronic apparatus 100. However, this configuration is only an embodiment, and the speaker 140 may output the audio data downward, laterally, or forward from the electronic apparatus 100. If multi-channel audio data is received, the speaker 140 may output audio based on channel information.

The processor 150 may include at least one processor. In detail, at least one processor may include at least one of a Central Processing Unit (CPU), a Graphics Processing Unit (GPU), an Accelerated Processing Unit (APU), a Many Integrated Core (MIC), a Digital Signal Processor (DSP), a Neural Processing Unit (NPU), a hardware accelerator, or a machine learning accelerator. The processor 150 may control one or any combination of other components included in the electronic apparatus, and perform an operation related to the communication or data processing. At least one processor 150 may execute at least one program or instruction stored in the memory. For example, at least one processor 150 may perform a method according to an embodiment of the present disclosure by executing at least one instruction stored in the memory.

At least one processor 150 may be implemented as a single-core processor including a single core, or may be implemented as at least one multi-core processor including multiple cores (e.g., homogeneous multiple cores or heterogeneous multiple cores). If at least one processor 150 is implemented as the multi-core processor, each of the multiple cores included in the multi-core processor may include a processor internal memory such as a cache memory or an on-chip memory, and a common cache shared by the multiple cores may be included in the multi-core processor. In addition, each (or some) of the multiple cores included in the multi-core processor may independently read and perform a program instruction for implementing the method according to an embodiment of the present disclosure, or all (or some) of the multiple cores may be linked with each other to read and perform the program instruction for implementing the method according to an embodiment of the present disclosure.

In particular, the processor 150 may obtain the sampled audio signal from the video based on the sampling period corresponding to a voice period included in the audio signal. The processor 150 may identify the speaker generating a voice in the video based on the obtained audio signal and the weight value corresponding to a length of a text included in the video. The voice period may represent the period of time during which a voice signal is output. The voice period may represent the length of the voice signal (for example, in seconds).

In addition, the processor 150 may obtain a sampling period less than or equal to a predetermined value if a detection time point for identifying the sampling period corresponds to a start point of the voice period included in the audio signal. The predetermined value may be a threshold value. The predetermined value may be set by the user. The processor 150 may obtain a sampling period greater than or equal to the predetermined value if the detection time point for identifying the sampling period corresponds to a point at which a threshold time elapses since the start point of the voice period included in the audio signal. The threshold time may be set by the user. The threshold time may be predetermined. In other words, sampling is carried out at shorter intervals immediately after the start of the voice period included in the audio signal and subsequently, sampling is carried out at longer intervals.

In addition, the processor 150 may perform control to reset the sampling period if the detection time point for identifying the sampling period corresponds to an end point of the voice period included in the audio signal. The processor 150 may obtain the sampling period by using the number of sampled audio signals obtained based on a total number of sampled audio signals, a length of the audio signal, and an audio signal length corresponding to subtitle output.

The processor 150 may perform a function for recognizing the text included in a text region obtained from the video output to the display. The processor 150 may obtain a length corresponding to the text obtained using the function. The processor 150 may obtain a length in which the text included in the video output to the display and the audio signal are simultaneously output, by using the length of the audio signal corresponding to the identified text that is obtained based on the length corresponding to the identified text, and obtain the weight value based on the sampling period and the length in which the text included in the video output to the display and the audio signal are simultaneously output.

The processor 150 may obtain the probability value for identifying the speaker generating the voice in the video based on the obtained weight value and the total number of sampled audio signals. The processor 150 may identify a first speaker as generating a voice if the obtained probability value corresponds to a first probability value corresponding to the first speaker generating the voice included in the audio signal. The processor 150 may identify a second speaker as generating a voice if the obtained probability value corresponds to a second probability value corresponding to the second speaker generating the voice included in the audio signal. The processor 150 may control the display to display the text corresponding to the audio signal from the identified first speaker and information about the first speaker together, if the first speaker is identified as generating the voice. The processor 150 may control the display to display the text corresponding to the audio signal from the identified second speaker and information about the second speaker together if the second speaker is identified as generating the voice.

The processor 150 may obtain the weight values based on a plurality of voice periods if the voice periods included in the obtained audio signals correspond to voice periods of a plurality of speakers.

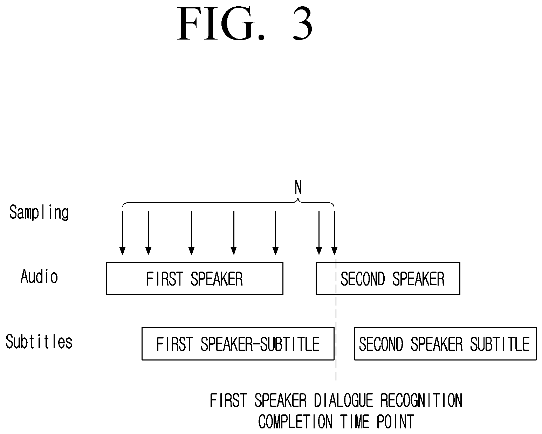

Hereinafter, each step described above is described specifically below with reference to FIGS. 3 to 7.

First, the processor 150 may obtain the audio data including the voice period. The processor 150 may recognize the start or end point of the voice period. The processor 150 may change the sampling period. Here, sampling may indicate a process of converting the audio signal in an analog form into digital data.

In an embodiment, as shown in FIG. 3, the processor 150 may obtain the sampling period less than or equal to the predetermined value if the detection time point for identifying the sampling period corresponds to the start point of the voice period included in the audio signal. The processor 150 may obtain the sampling period greater than or equal to the predetermined value if the detection time point for identifying the sampling period corresponds to the point at which the threshold time elapses since the start point of the voice period included in the audio signal. In addition, the processor 150 may perform the control to reset the sampling period if the detection time point for identifying the sampling period corresponds to the end point of the voice period included in the audio signal.

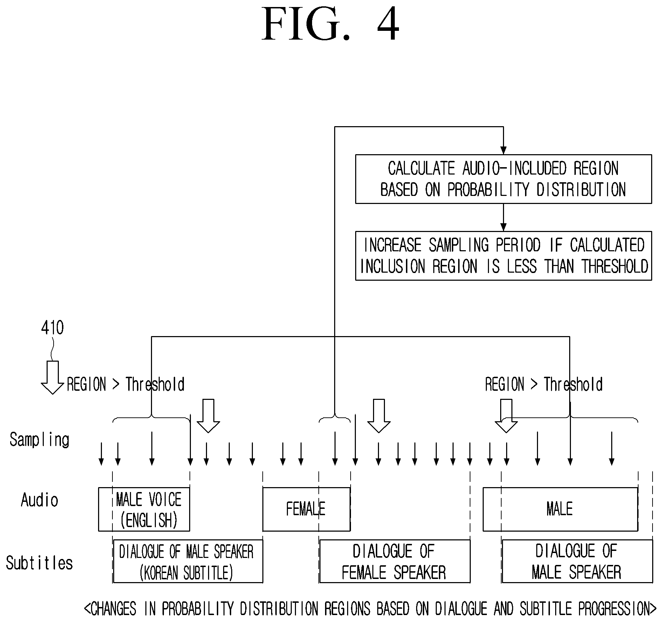

In another embodiment, the processor 150 may dynamically set the sampling period based on the audio signal length and the subtitle length, as shown in FIG. 4. Advantageously, the use of adaptive or dynamic sampling periods improves voice and dialogue recognition rates.

If short dialogues are consecutively provided, the processor 150 may adjust the sampling period. In detail, the processor 150 may obtain a probability distribution based on the subtitle length. A probability distribution value may be a ratio of a length of the period including the audio signal to a time during which the subtitle is displayed.

Here, the processor 150 may identify the length of the period including the audio signal based on the obtained probability distribution value. If the length of the period including the audio signal is less than a threshold value, the processor 150 may identify that the speaker outputs the audio signal (or the dialogue) at a faster rate. Therefore, the processor 150 may set the short sampling period.

As shown in FIG. 4, the processor 150 may recognize the dialogue at a point 410 at which the audio signal is identified.

Next, the processor 150 may obtain the probability distribution value for a region including the audio signal and then identify whether the obtained value is less than the threshold value.

The processor 150 may set the short sampling period if the obtained value is identified as being less than the threshold value. Here, the short sampling period is set, and the processor 150 may thus identify the subtitle as being close to real time.

If the short dialogues are consecutively provided, a time point for recognizing the start of the dialogue may be later than a case where the sampling period is constant. That is, if the short dialogues are consecutively provided for a short time, a next dialogue may start while the processor 150 recognizes a previous dialogue.

Therefore, if it is identified that the short dialogues are consecutively provided, the processor 150 may recognize the dialogue in real time by setting the short sampling period.

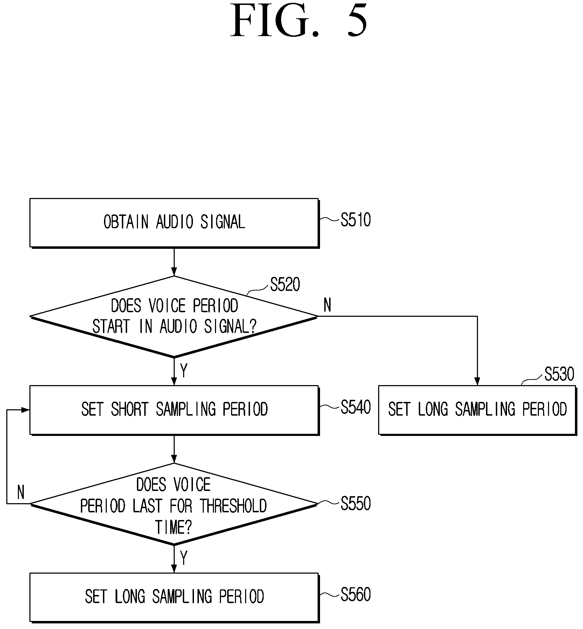

In addition, the processor 150 may reset the sampling period if the end point of the voice period included in the audio signal is identified. Here, a method for setting the sampling period is described below with reference to FIG. 5.

First, the processor 150 may obtain the audio signal (S510). Meanwhile, for the convenience of description, the audio signal is described below on the assumption that the audio signal is an audio signal pre-stored in the video data, which is only an embodiment, the processor 150 may obtain the audio signal through a microphone (not shown).

In detail, the electronic apparatus 100 may obtain the audio signal by using the microphone (not shown) included in the electronic apparatus 100, and may also obtain the audio signal by using a microphone included in an external remote control.

Meanwhile, the electronic apparatus 100 may transmit the obtained audio signal to an external server. Here, the external server may perform only a function of converting the obtained audio signal into the text, or may sample the obtained audio signal or identify the speaker by using the weight value corresponding to the length of the text included in the video.

However, this configuration is only an embodiment. The electronic apparatus 100 may omit the operation of transmitting the audio signal to the external server, and convert the audio signal into the text, sample the audio signal, and identify the speaker by using the weight value.

In addition, the audio signal may be a voice signal input to a remote control by a user.

Here, the audio signal may include the voice period, and the voice period may include a voice spoken by at least one speaker.

The processor 150 may identify whether the voice period starts in the audio signal (S520). In other words, it is determined whether the audio signal contains dialogue or speech.

In an embodiment, the processor 150 may detect the voice period by using energy of each frame of the audio signal to identify the voice period in the audio signal.

In another embodiment, the processor 150 may detect the voice period by using a zero-crossing rate of each frame of the audio signal, and extract a feature vector from each frame of the audio signal, and determine whether the voice signal is present based on pre-extracted feature vectors by using a support vector machine (SVM), thereby detecting the voice period.

However, this configuration is only an embodiment. The processor 150 may identify the voice period in the audio signal by using a method of voice activity detection (VAD) or a method of mel-frequency cepstral coefficients (MFCC).

The processor 150 may set the long sampling period (S530) if the voice period is not identified as starting (S520-N). The rate of sampling may be lower if no dialogue or speech is identified in the audio signal. Here, the processor 150 may save resources by reducing a frequency of collecting audio signal data.

However, the processor 150 may set the short sampling period (S540) if the voice period is identified as starting in the audio signal (S520-Y). The rate of sampling may be higher is dialogue or speech is identified in the audio signal.

Here, to obtain the sampling period, the processor 150 may obtain a period during which the voice period and the subtitle are simultaneously output, from the periods during which the voice period and the subtitle are output, by using an equation below.${T}_{sub} = len \left(sub\right) * μ \left(ms/word\right)$

Here, T_{sub} indicates a total length (time) of the voice period corresponding to the subtitle, and len(sub) indicates the number of words included in the subtitle. In addition, µ(ms/word) indicates an average time it takes to speak one word.

For example, if the subtitle is "What's for dinner tonight?" and the average speaking time per word is 0.5 seconds, the number of words included in the subtitle may be five. Here, T_{sub} may be 0.5*5, i.e., 2.5 seconds. The processor 150 may use T_{sub} to identify the level of matching between the time during which the subtitle is displayed and a time during which the voice period is output.

Meanwhile, the processor 150 may obtain the number of audio samples to be used to calculate the sampling period. Here, the processor 150 may use the <Equation 2> below.${N}_{C} = {T}_{sub} / {T}_{total} \times N$
(N_{c}: the number of sampled audio signals used to obtain the sampling period, N: a total number of sampled audio signals, Tₜₒₜₐₗ: a total length of the audio signal, and T_{sub}: an audio signal length corresponding to a time during which the subtitle is displayed on the display)

For example, as shown in FIG. 3, while a first speaker-subtitle "What's for dinner tonight?" is displayed on the display 130, the first speaker and the second speaker may generate the audio signals. In detail, the first speaker may generate a first speaker-audio signal "What's for dinner tonight?" and the second speaker may then generate a second speaker-audio signal "Dinner is ...."

Here, the processor 150 may identify that Tₜₒₜₐₗ as 3.5, T_{sub} as 2.5, and the total number of sampled audio signals as 35. In addition, the processor 150 may identify that N_{c} as 25 based on <Equation 2>.

The processor 150 may set the sampling period by using the number of audio samples obtained using the method described above.

In addition, the processor 150 may increase the frequency of collecting audio signal data by setting the short sampling period if it is identified that the speaker starts speaking in the audio signal.

On the other hand, the processor 150 may set the long sampling period (S560) if the voice period lasts for the threshold time (S550-Y). In detail, the processor 150 may identify that the speaker speaking the voice signal does change if the voice period lasts for the threshold time. Therefore, the processor 150 may save the resources by setting the long sampling period.

Meanwhile, the processor 150 may set the short sampling period (S540) if it is identified that the voice period does not last for the threshold time (S550-N). That is, the processor 150 may increase the frequency of collecting the audio signals because the speaker speaking the audio signal may change if the voice period lasts less than the threshold time.

According to the above-described method, the processor 150 may change the sampling period based on the voice period included in the audio signal, and obtain the sampled audio signal based on the changed sampling period.

The processor 150 may obtain the weight value (or a weight) applied to the sampled audio signal as shown in FIG. 5. In detail, if the audio signal generated by the speaker and the subtitle corresponding to the audio signal are simultaneously output, the high weight value may be set because information about the speaker corresponding to the subtitle may be included in the sampled audio signal.

The processor 150 may set the weight value to be applied to sampling the second speaker-audio signal to the low value if the audio signal generated by the second speaker is output while the first speaker-subtitle is displayed on the display 130. Accordingly, even if the second speaker-audio signal is generated while the first speaker-subtitle is displayed on the display 130, the low weight value to be applied to the second speaker-audio signal may be set, and the processor 150 may thus identify the first speaker-subtitle as the subtitle generated by the first speaker.

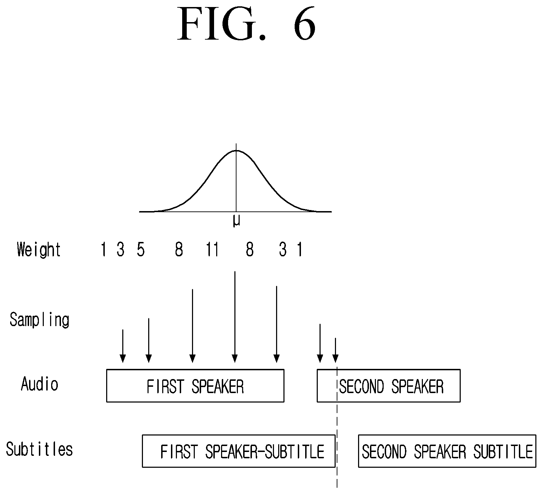

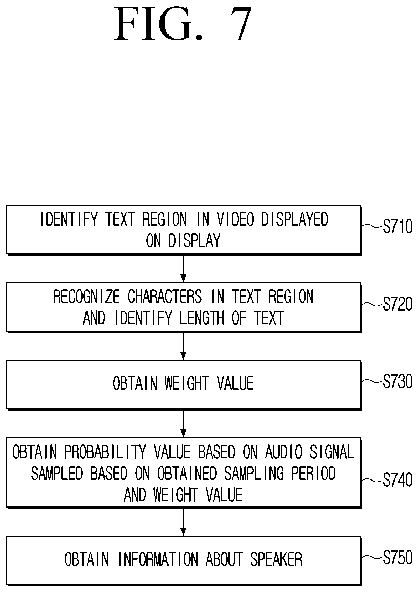

A specific process for identifying the subtitle and the speaker corresponding to the subtitle based on the weight value is described below with reference to FIGS. 6 and 7.

First, the processor 150 may identify the text region in the video displayed on the display 130 (S710). Here, the text region in the video may be disposed at the lower portion or upper end of the display 130.

The processor 150 may recognize characters in the text region and identify the length of the text (S720).

In detail, the processor 150 may perform the function for recognizing the text included in the text region obtained from the video output to the display 130, and obtain the length corresponding to the text obtained using the above-described function.

The processor 150 may analyze pixel data of the video displayed on the display 130 by using an optical character recognition (OCR) method to thus recognize a character pattern, and convert the recognized characters into the text.

In addition, the processor 150 may identify a space between the characters by using the optical character recognition (OCR) method to thus identify the text length.

The processor 150 may obtain the weight value to be applied to the sampled audio signal based on the recognized text length (S730). In detail, the processor 150 may obtain the length in which the text included in the video output to the display 130 and the audio signal are simultaneously output, by using the length of the audio signal corresponding to the identified text obtained based on the length corresponding to the identified text. In addition, the processor 150 may obtain the weight value based on the sampling period and the length in which the text included in the video output to the display 130 and the audio signal are simultaneously output.

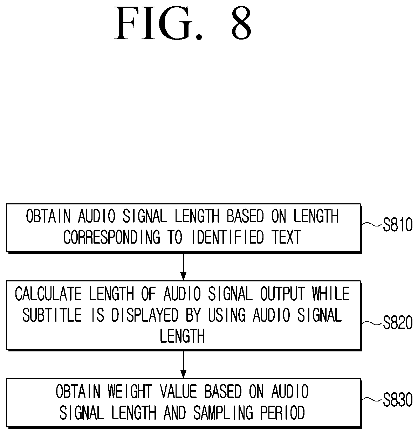

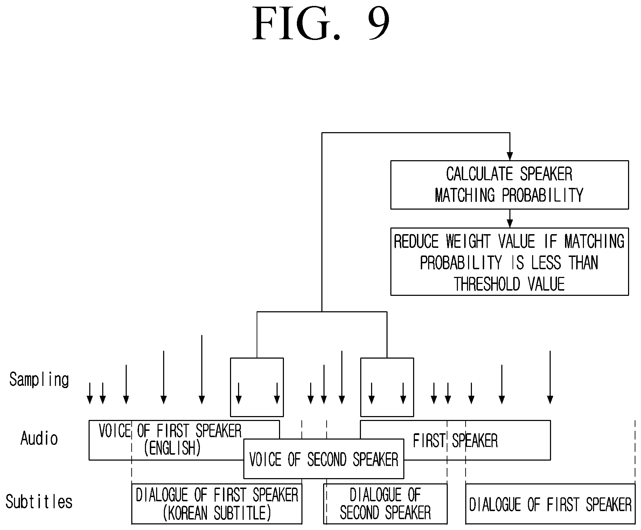

A method for obtaining the weight value is described below with reference to FIGS. 8 and 9.

The processor 150 may obtain the audio signal length based on the length identified using the above-described method (S810).

For example, if the recognized subtitle is "Today's Dinner is Jajangmyeon.", the processor 150 may obtain the length of the audio signal corresponding to the recognized subtitle, "Today's Dinner is Jajangmyeon."

Here, the processor 150 may calculate the length of the audio signal output while the subtitle is displayed by using the audio signal length (S820).

For example, if the recognized subtitle is displayed for five seconds and the recognized audio signal corresponding to the subtitle is output for seven seconds, the processor 150 may obtain a signal corresponding to the first five seconds of the audio signal.

However, if the audio signal is output for three seconds and the recognized subtitle is displayed for five seconds, the processor 150 may obtain the length of the audio signal output for three seconds.

Meanwhile, the processor 150 may obtain the weight value based on the audio signal length and the sampling period (S830).

For example, the subtitle corresponding to a voice of the first speaker may be displayed on the display 130 even though speaking of the first speaker ends and speaking of the second speaker starts. Here, the processor 150 may set the high weight value if the speaking of the first speaker and the subtitle corresponding to the speaking of the first speaker are simultaneously output. However, the processor 150 may set the low weight value if the first speaker-subtitle is output to the display 130 even though the speaking of the second speaker starts.

Meanwhile, as shown in FIG. 9, the processor 150 may set the low weight value if the first speaker and the second speaker speak simultaneously.

In detail, if the voice of the first speaker and the voice of the second speaker are simultaneously output, the processor 150 may obtain a probability (a speaker matching probability) of whether the first speaker and the second speaker are the same person. A method for calculating the speaker matching probability is specifically described below in step S740 of FIG. 7.

If the voices of the first and second speakers are simultaneously output, the processor 150 may identify that the 'speaker matching probability' between the first and second speakers is less than the threshold value. Here, the processor 150 may reduce the weight value after identifying that the "matching probability" between the first and second speakers is less than the threshold value.

Referring back to FIG. 7, the processor 150 may obtain the probability value based on the sampling period obtained using the above-described method and the weight value (S740).

In addition, the processor 150 may obtain the information about the speaker corresponding to the subtitle based on the obtained probability value (S750).

In detail, the processor 150 may identify the person speaking as the first speaker if the speaking of the first speaker and the subtitle corresponding to the voice of the first speaker are simultaneously output. In addition, if the second speaker speaks and the subtitle corresponding to the voice of the first speaker is simultaneously output, the low weight value may be set to the speaking of the second speaker. Therefore, the processor 150 may identify that the subtitle corresponding to the voice of the first speaker is speech data of the first speaker rather than that of the second speaker.

The processor 150 may obtain the probability value by using the following equation based on the sampled audio signal and the weight value based on the obtained sampling period.$\begin{matrix}P = \left(P\left({W}_{N}⋅{S}_{N}\right)+P\left({W}_{N - 1}⋅{S}_{N - 1}\right)+⋯+P\left({W}_{1}⋅{S}_{1}\right)\right) / N , \\ \left(\begin{matrix}N : the total number of sampled audio signals , \\ W : weight , S : sample\end{matrix}\right)\end{matrix}$

That is, the processor 150 may obtain the probability value for identifying the speaker generating the voice in the video based on the obtained weight value and the total number of sampled audio signals. Advantageously, a recognition rate of a voice and the dialogue may be improved by using multiple adaptive samplings.

The weight may be obtained using the following equation.$\begin{matrix}Weight = {W}_{i} = α ⋅ P \left({T}_{1}<{S}_{i}<{T}_{sub}\right) \\ α : Weight threshold , T : time\end{matrix}$

Here, the processor 150 may identify the first speaker as generating the voice if the obtained probability value corresponds to the first probability value corresponding to the first speaker generating the voice included in the audio signal, and identify the second speaker as generating the voice if the obtained probability value corresponds to the second probability value corresponding to the second speaker generating the voice included in the audio signal.

In addition, based on an identification result, the processor 150 may control the display 130 to display the text corresponding to the audio signal from the identified first speaker and the information about the first speaker together, if the first speaker is identified as generating the voice, and control the display 130 to display the text corresponding to the audio signal from the identified second speaker and the information about the second speaker together, if the second speaker is identified as generating the voice.

For example, the electronic apparatus 100 may set the probability value corresponding to the first speaker to 0 and the probability value corresponding to the second speaker to 1. Here, if the obtained probability value is 0.3, the electronic apparatus 100 may identify the speaker corresponding to the subtitle as the first speaker. However, if the obtained probability value is 0.85, the electronic apparatus 100 may identify the speaker corresponding to the subtitle as the second speaker.

According to the above-described method, the processor 150 may recognize the speaker matching (or corresponding to) the dialogue based on the sampled audio signal and the weight value.

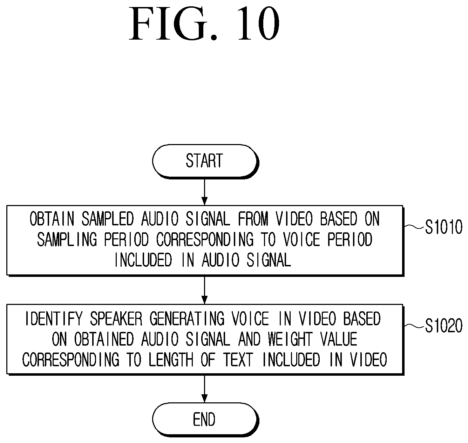

FIG. 10 is a flowchart for describing a controlling method of an electronic apparatus according to an embodiment of the present disclosure.

First, the electronic apparatus 100 may obtain the sampled audio signal from the video based on the sampling period corresponding to the voice period included in the audio signal (S1010). The electronic apparatus 100 may obtain the sampling period based on whether the voice period included in the audio signal starts or whether the voice period lasts for the threshold time.

The electronic apparatus 100 may identify the speaker generating the voice in the video based on the obtained audio signal and the weight value corresponding to the length of the text included in the video (S1020). The electronic apparatus 100 may obtain the sampled audio signal by using the sampling period obtained by the above-described method, the audio signal, and the length of the text included in the video.

In addition, the methods according to the various embodiments disclosed in the present disclosure may be included and provided in a computer program product. The computer program product may be traded as a commodity between a seller and a purchaser. The computer program product may be distributed in a form of the machine-readable storage medium (e.g., a compact disc read only memory (CD-ROM)), or may be distributed online (e.g., by download or upload) via an application store (e.g., PlayStore^{TM}) or directly between two user devices 20 (e.g., smartphones). In case of the online distribution, at least a part of the computer program product (e.g., downloadable app) may be at least temporarily stored or temporarily provided in the machine-readable storage medium such as the memory of a manufacturer server, an application store server, or a relay server.

The methods according to the various embodiments of the present disclosure may be implemented by software including an instruction stored in the machine-readable storage medium (for example, a computer-readable storage medium). A machine may be an apparatus that invokes the stored instruction from the storage medium, may be operated based on the invoked instruction, and may include a server device or the electronic apparatus according to the disclosed embodiments.

Meanwhile, a machine-readable storage medium may be provided in the form of a non-transitory computer-readable storage medium. Here, the "non-transitory computer-readable storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored.

If the instruction is executed by the processor, the processor may directly perform a function corresponding to the instruction or other components may perform the function corresponding to the instruction under a control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope of the present disclosure.

## Claims

1. An electronic apparatus comprising:
a display;
a communication interface;
a memory storing instructions; and
at least one processor;
wherein, if collectively or individually executed by the at least one processor, the instructions cause the electronic apparatus to:
obtain a sampled audio signal from a video based on a sampling period corresponding to a voice period included in an audio signal; and
identify a speaker generating a voice in the video based on the obtained audio signal and a weight value corresponding to a length of a text included in the video.

2. The apparatus as claimed in claim 1, wherein, if collectively or individually executed by the at least one processor, the instructions cause the electronic apparatus to:
obtain the sampling period as less than or equal to a predetermined value if a detection time point for identifying the sampling period corresponds to a start point of the voice period included in the audio signal; and
obtain the sampling period as greater than or equal to the predetermined value if the detection time point for identifying the sampling period corresponds to a point at which a threshold time elapses since the start point of the voice period included in the audio signal.

3. The apparatus as claimed in claim 1, wherein, if collectively or individually executed by the at least one processor, the instructions cause the electronic apparatus to reset the sampling period if the detection time point for identifying the sampling period corresponds to an end point of the voice period included in the audio signal.

4. The apparatus as claimed in claim 1, wherein, if collectively or individually executed by the at least one processor, the instructions cause the electronic apparatus to obtain the sampling period by using the number of sampled audio signals obtained based on a total number of sampled audio signals, a length of the audio signal, and an audio signal length corresponding to a subtitle output.

5. The apparatus as claimed in claim 1, wherein, if collectively or individually executed by the at least one processor, the instructions cause the electronic apparatus to:
perform a function for recognizing the text included in a text region obtained from the video output to the display; and
obtain a length corresponding to the text obtained using the function.

6. The apparatus as claimed in claim 5, wherein, if collectively or individually executed by the at least one processor, the instructions cause the electronic apparatus to:
obtain a length in which the text included in the video output to the display and the audio signal are simultaneously output, by using the length of the audio signal corresponding to the identified text that is obtained based on the length corresponding to the identified text; and
obtain the weight value based on the sampling period and the length in which the text included in the video output to the display and the audio signal are simultaneously output.

7. The apparatus as claimed in claim 6, wherein, if collectively or individually executed by the at least one processor, the instructions cause the electronic apparatus to obtain a probability value for identifying the speaker generating the voice in the video based on the obtained weight value and a total number of sampled audio signals.

8. The apparatus as claimed in claim 7, wherein, if collectively or individually executed by the at least one processor, the instructions cause the electronic apparatus to:
identify a first speaker as generating the voice if the obtained probability value corresponds to a first probability value corresponding to the first speaker generating the voice included in the audio signal; and
identify a second speaker as generating the voice if the obtained probability value corresponds to a second probability value corresponding to the second speaker generating the voice included in the audio signal.

9. The apparatus as claimed in claim 8, wherein, if collectively or individually executed by the at least one processor, the instructions cause the electronic apparatus to:
control the display to display the text corresponding to the audio signal from the identified first speaker and information about the first speaker together if the first speaker is identified as generating the voice, and
control the display to display the text corresponding to the audio signal from the identified second speaker and information about the second speaker together if the second speaker is identified as generating the voice.

10. The apparatus as claimed in claim 6, wherein, if collectively or individually executed by the at least one processor, the instructions cause the electronic apparatus to obtain weight values based on a plurality of voice periods if the voice periods included in the obtained audio signals correspond to voice periods of a plurality of speakers.

11. A controlling method of an electronic apparatus, the method comprising:
obtaining a sampled audio signal from a video based on a sampling period corresponding to a voice period included in an audio signal; and
identifying a speaker generating a voice in the video based on the obtained audio signal and a weight value corresponding to a length of a text included in the video.

12. The method as claimed in claim 11, wherein in the setting of the sampling period includes:
obtaining the sampling period as less than or equal to a predetermined value if a detection time point for identifying the sampling period corresponds to a start point of the voice period included in the audio signal, and
obtaining the sampling period as greater than or equal to the predetermined value if the detection time point for identifying the sampling period corresponds to a point at which a threshold time elapses since the start point of the voice period included in the audio signal.

13. The method as claimed in claim 11, wherein the setting of the sampling period includes resetting the sampling period if the detection time point for identifying the sampling period corresponds to an end point of the voice period included in the audio signal.

14. The method as claimed in claim 11, wherein the setting of the sampling period includes obtaining the sampling period by using the number of sampled audio signals obtained based on a total number of sampled audio signals, a length of the audio signal, and an audio signal length corresponding to a subtitle output.

15. A non-transitory computer-readable storage medium including a program for executing a controlling method of an electronic apparatus, wherein the method includes:
obtaining a sampled audio signal from a video based on a sampling period corresponding to a voice period included in an audio signal, and
identifying a speaker generating a voice in the video based on the obtained audio signal and a weight value corresponding to a length of a text included in the video.
